Europäisches Patentamt

European Patent Office

Office européen des brevets

(11) Veröffentlichungsnummer: **0 548 097 B1**

(12) **EUROPÄISCHE PATENTSCHRIFT**

(45) Veröffentlichungstag der Patentschrift: **15.02.95**

(51) Int. Cl.[6]: **B41J 2/205**, H04N 1/46

(21) Anmeldenummer: **91914743.9**

(22) Anmeldetag: **23.08.91**

(86) Internationale Anmeldenummer:
**PCT/DE91/00678**

(87) Internationale Veröffentlichungsnummer:
**WO 92/04191 (19.03.92 92/07)**

(54) **VERFAHREN ZUM REDUZIEREN DER MITTELS TINTENSCHREIBEINRICHTUNGEN AUF AUFZEICHNUNGSTRÄGER AUFGEBRACHTEN TINTENMENGE.**

(30) Priorität: **10.09.90 EP 90117406**

(43) Veröffentlichungstag der Anmeldung:
**30.06.93 Patentblatt 93/26**

(45) Bekanntmachung des Hinweises auf die Patenterteilung:
**15.02.95 Patentblatt 95/07**

(84) Benannte Vertragsstaaten:
**DE FR GB IT**

(56) Entgegenhaltungen:
EP-A- 0 160 318
EP-A- 0 300 743
EP-A- 0 317 140
EP-A- 0 400 680
DE-A- 3 431 484

IBM TECHNICAL DISCLOSURE BULLETIN vol. 27, No. 4B, September 1984, NEW YORK US, page 2504, KITAMURA J.: "Draft font generator"

(73) Patentinhaber: **EASTMAN KODAK COMPANY**
**343 State Street**
**Rochester,**
**New York 14650 (US)**

(72) Erfinder: **PETSCHIK, Benno**
**Melanchtonweg 6**
**D-8150 Markt Schwaben (DE)**
Erfinder: **SCHERDEL, Stefan**
**Saalburgstr. 4**
**D-8000 München 70 (DE)**

(74) Vertreter: **Pohle, Reinhard, Dipl.-Phys. et al**
**c/o KODAK AKTIENGESELLSCHAFT**
**Patentabteilung**
**Hedelfinger Str. 54-60**
**D-70327 Stuttgart (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**PATENT ABSTRACTS OF JAPAN** vol. 12, No. 464 (M-771)(3311) 07 December 1988, JP-A-63188052 (KAZUHIRO NAKADA) 3 August 1988

**Beschreibung**

Die Erfindung betrifft ein Verfahren zum Reduzieren der mittels Tintenschreibeinrichtungen auf Aufzeichnungsträger aufgebrachten Tintenmenge gemäß den Merkmalen des Patentanspruches 1.

Zur Darstellung von aus Einzelpunkten gebildeten, mosaikartig aufgebauten Zeichen werden sog. Mosaikdruckeinrichtungen verwendet. Derartige Druckeinrichtungen können in vorteilhafter Weise mit einem Tintendruckwerk ausgestattet sein. Dabei trägt das Tintendruckwerk einen entweder nach dem piezoelektrischen oder nach dem thermoelektrischen Prinzip arbeitenden Tintendruckkopf. Ein Kennzeichen solcher Tintendruckeinrichtungen ist es, daß die zu druckenden Zeichen und/oder grafischen Muster auf dem Aufzeichnungsträger nicht als Ganzes abgedruckt, sondern aus einer Vielzahl von einzelnen kleinen Punkten zusammengesetzt werden. Die Schriftqualität dieser Zeichen hängt im wesentlichen Maße von der Auflösung ab. Diese ist bestimmt durch die Anzahl der Einzelpunkte je Zeichen, d.h. durch die Anzahl der Zeilen und Spalten der Zeichenmatrix, innerhalb der die Zeichen aufgebaut werden.

In der DE 28 43 064 ist ein Tintendruckkopf für den Einsatz in einer Tintenmosaikschreibeinrichtung beschrieben, bei dem eine Vielzahl von in hoher Dichte angeordneter Austrittsdüsen vorgesehen ist, aus denen einzelne Tintentröpfchen ausgestoßen und gegen einen Aufzeichnungsträger geschleudert werden. Der Tröpfchenausstoß in einem solchen sog. Drop-On-Demand-Druckkopf erfolgt unter dem Einfluß von thermoelektrischen Wandlerelementen. Diese sind in Form von Heizwiderständen auf einem Substrat angeordnet, individuell ansteuerbar und einzelnen Tintenkanälen zugeordnet. Bei impulsweiser Ansteuerung des Heizelementes wird im betreffenden Tintenkanal die Tintendampfblase erzeugt, die zum Ausstoß eines einzelnen Tröpfchens führt. Dieses unter dem Begriff Bubble-Jet-Technik bekannt gewordene Verfahren ermöglicht den Aufbau einer Tintenschreibeinrichtung mit hoher Auflösung, wobei der Schreibkopf mit vielen engen, nebeneinander angeordneten Düsenöffnungen aufgebaut werden kann.

Ein solcher Tintendruckkopf kann sowohl für Schwarz-Weiß-Tintendruck als auch für farbigen Tintendruck verwendet werden. Bei einer Mehrfarbendruckeinrichtung können dem einzelnen Tintendruckkopf mehrere Teil-Tintendruckköpfe zugeordnet sein, bei denen jeder Teil-Tintendruckkopf mit einer gesonderten Farbe betrieben wird. Bei Verwendung der Grundfarben Cyan, Magenta und Gelb (Yellow) können an einer Pixel-Position insgesamt acht verschiedene Farben erzeugt werden: Weiß (kein Druck), Cyan, Magenta und Yellow, wenn nur eine Grundfarbe gedruckt wird; Rot, Grün und Blau, wenn zwei Grundfarben übereinander gedruckt werden; und Schwarz durch Übereinanderdruck aller drei Grundfarben. Die Erzeugung eines schwarzen Pixels kann anstelle des Übereinanderdruckens von Cyan, Magenta und Yellow auch durch das Drucken eines einzigen Pixels mit schwarzer Tinte ersetzt werden. Das hat den Vorteil, daß auf das Papier nur die "einfache" Menge Lösungsmittel aufgebracht wird, da nur ein Pixel gedruckt wird und nicht drei Pixel. Außerdem sind die Tinten Cyan, Magenta und Yellow nicht so ideal, daß ihr Übereinanderdruck reines Schwarz ergeben würde und beim Betrieb als Schwarz/Weiß-Drucker wird nur der Schwarz-Druckkopf benutzt.

Der Gesamt-Farbeindruck eines Farbdrucks entsteht durch die additive Farbmischung der nebeneinander auf den Aufzeichnungsträger aufgebrachten einzelnen Pixeln aus den genannten acht Farben.

Wird mit einer derartigen Tintendruckeinrichtung Farbdruck erzeugt, so kann es bei einem erhöhten Farbauftrag zu einem Verlaufen und Verschwimmen der noch nicht getrockneten, nebeneinander liegenden Pixel kommen. Dies führt zu einem verwaschenen Schriftbild und ist nachteilig für die Kantenschärfe der dargestellten Zeichen. Durch die Feuchtigkeit der Tintenflüssigkeiten besteht ferner die Gefahr, daß der Aufzeichnungsträger wellig wird.

Außerdem erlauben solche Tintendruckeinrichtungen auch vielfach das Bedrucken unterschiedlicher Aufzeichnungsträgerarten, wie Einzelblätter, randgelochtes Endlospapier oder Klarsichtfolien, wie sie beispielsweise für Overheadprojektoren Verwendung finden.

Beim Bedrucken solcher transparenter, glatter Folien mit voller Punktdichte (z.B. 300 dpi) ergibt sich häufig ein Verlaufen des Schriftbildes auf der Folie. Die einzelnen Tintentröpfchen laufen bei Folienkontakt ineinander.

Aus der EP-A-0 317 140 ist ein Verfahren bekannt, bei dem jeweils zwei benachbarte Pixel der ursprünglichen Druckinformation zu einem Druckpixel und einem Weißpixel verrechnet und die Druckpixel und Weißpixel schachbrettartig auf dem Aufzeichnungsträger angeordnet werden.

Ein vergleichbares Verfahren ist auch aus der EP-A-0 300 743 bekannt.

Der Erfindung liegt deshalb die Aufgabe zugrunde, für eine Tintenschreibeinrichtung der eingangs genannten Art Maßnahmen anzugeben, mit denen es ermöglicht wird, die aufzutragende Tintenmenge so zu reduzieren, daß keine merklichen Einbußen an der Druckqualität entstehen und die, Wiedergabe bei Farbdruck weitgehend farbrichtig erfolgt.

Diese Aufgabe wird bei einer Tintendruckeinrichtung mit einem Verfahren gemäß den Merkmalen des Patentanspruches 1 gelöst. Vorteilhafte Weiterbildungen der Erfindung sind in den Unteransprüchen gekennzeichnet.

Dadurch, daß jeweils zwei benachbarte Pixel der ursprünglichen Druckinformation zu einem Druckpixel und zu einem weißen Pixel verrechnet werden, wird die Anzahl der zu druckenden Pixel auf dem Aufzeichnungsträger auf die Hälfte reduziert. Dies geschieht mit Hilfe einer einfachen Reduzierungssteuerung in der zentralen Steuerung der Druckeinrichtung, so daß der dafür benötigte Zeitaufwand zur Durchführung dieses Verfahrens sehr gering ist, was eine Verarbeitung der Druckdaten in Echtzeit ermöglicht.

Das angegebene Verfahren ist gleichermaßen für Einfarb- oder Mehrfarbendruck geeignet. Bei Farbdruck wird das Reduzierungsverfahren separat für jeden Farbauszug (Cyan, Magenta, Yellow) durchgeführt.

Durch Anordnung der Druckpixel und weißen Pixel in einem schachbrettartigen Muster ergeben sich für die einzelnen Tintentröpfchen möglichst kleine Berührungsflächen, so daß die Gefahr, daß verschiedenfarbige Tinten auf dem Aufzeichnungsträger verschwimmen, verringert ist und das Papier nicht wellig wird. Die Wiedergabe bei Mehrfarbendruck erfolgt weitestgehend farbrichtig.

Eine Ausführungsform der Erfindung ist in den Zeichnungen dargestellt und wird im folgenden beispielsweise näher beschrieben. Es zeigen

Figur 1 ein schematisches Blockschaltbild der Signalverarbeitung einer Tintendruckeinrichtung,

Figur 2 ein Blockschaltbild der Druckaufbereitung beim Farbdruck,

Figur 3 ein Blockschaltbild der Druckaufbereitung beim Schwarz/Weiß-Druck,

Figur 4 ein Schema der Reduzierungssteuerung gemäß der Erfindung und

Figur 5 eine Zuordnungsvorschrift, wie von der ursprünglichen Druckzeile in die reduzierte Druckzeile umgerechnet wird.

Nachstehend werden mit Ausnahme der Reduzierungssteuerung nur Vorgänge (Programmabläufe) beschrieben, nicht aber Baugruppen und deren Funktionen in der Druckeinrichtung.

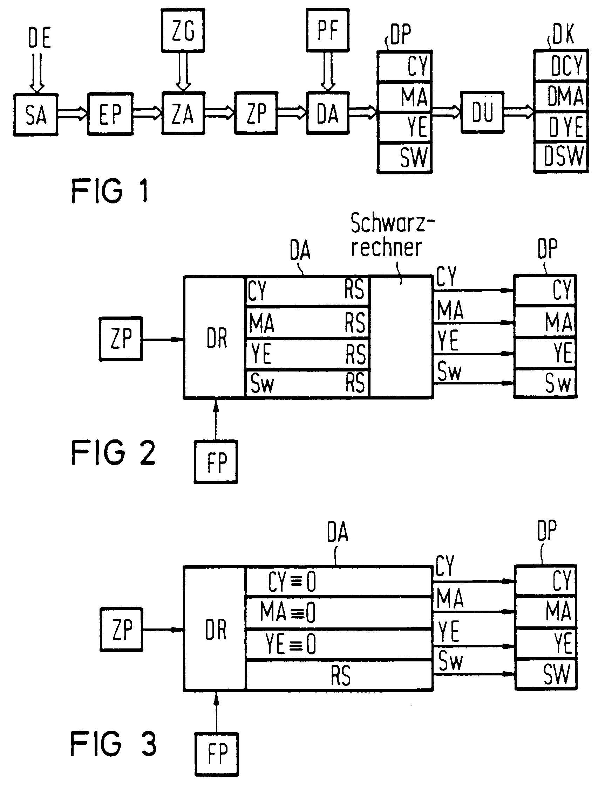

Bei der in Figur 1 nur schematisch dargestellten Signalverarbeitung in einer Tintendruckeinrichtung werden die am Dateneingang DE der Druckeinrichtung seriell oder parallel einlaufenden Daten, die z.B. von einem Rechner kommen können, von einer Schnittstellenanpassung SA auf das druckinterne Format umgesetzt und im Empfangspuffer EP gespeichert. Eine Zeilenaufbereitung ZA ruft die Daten aus dem Empfangspuffer EP ab. Unmittelbar wirkende Zeichen (Steuerbefehle, z.B. Rücksetzen, Umprogrammierungen) werden direkt ausgeführt, Druckdaten werden in den Zeilenpuffer ZP übertragen. Wenn die Druckdaten in zeichenorientierter Form vorliegen, liefert der Zeichengenerator ZG Informationen darüber, aus welchen Pixeln das zu bedruckende Zeichen zusammengesetzt ist. Die Druckaufbereitung DA setzt die Informationen aus dem Zeilenpuffer ZP in das eigentliche Druckbild um und schreibt diese in den Druckpuffer DP. In die Druckaufbereitung integriert ist eine noch näher zu beschreibende Reduzierungssteuerung. Der Druckpuffer DP besteht aus vier gleich großen Teilbereichen CY, MA, YE, SW, die jeweils einem Teil-Druckkopf (DCY, DMA, DYE, DSW) zugeordnet sind. Die Düsenansteuerung DÜ ruft nun die Information aus dem Druckpuffer DP ab und übergibt diese an die Düsen der einzelnen Tintendruckköpfe. Der Tintendruckkopf DK weist dabei vier nebeneinander angeordnete Teildruckköpfe DCY, DMA, DYE, DSW auf, die jeweils 50 Düsen beinhalten und so aufgebaut sind, daß ein Druckbild mit 300 dpi erzeugt werden kann. Der Teil-Druckkopf DSW wird mit schwarzer Tinte betrieben, die Druckköpfe DCY, DMA und DYE mit Tinte der Farben Cyan, Magenta und Gelb (Yellow). Damit läßt sich ein farbiges Druckbild, zusammengesetzt aus einzelnen Pixeln, abdrucken. Schwarze Pixel werden dabei über den Druckkopf DSW erzeugt, Pixel der Farben Cyan, Magenta und Yellow durch einen der Druckköpfe DCY, DMA, DYE und Pixel der Farben Rot, Grün und Blau durch Übereinanderdruck von zwei Farben aus den Druckköpfen DCY, DMA und DYE. Ein Weißpixel repräsentiert einen Punkt ohne Farbauftrag.

Figur 2 erläutert die Funktionsweise der Druckaufbereitung DA beim Farbdruck. Die im Zeilenpuffer in codierter Form vorliegende Farbinformation wird für jedes Pixel mit Hilfe der Farbpalette FP in ein Druckpixel der 8 möglichen Farben umgesetzt. Die Farbe Schwarz wird zunächst durch $cy = magenta = yellow = 1$ repräsentiert. Nachdem jeder der drei Farbauszüge die jeweils gleich aufgebaute Reduzierungssteuerung RS durchlaufen hat, wird das Schwarzsignal vom Schwarzrechner nach folgender Vorschrift gebildet:

```
if((cy = 1) and (ma = 1) and (ye = 1) then
      sw = 1;
      cy = 0;
      ma = 0;
      ye = 0;
endif;
```

Beim Schwarz-Weiß-Druck ist prinzipiell das gleiche Vorgehen möglich, indem für ein schwarz zu druckendes Pixel je ein cyan, magenta und yellow-Pixel gesetzt wird und die Reduzierung gemäß Figur 2 erfolgt. Einen einfacheren, schnelleren Weg zeigt Figur 3. Hier durchläuft das Schwarzsignal die Reduziersteuerung RS, während die Teil-Druckköpfe DCY, DMA und DYE nicht angesteuert werden.

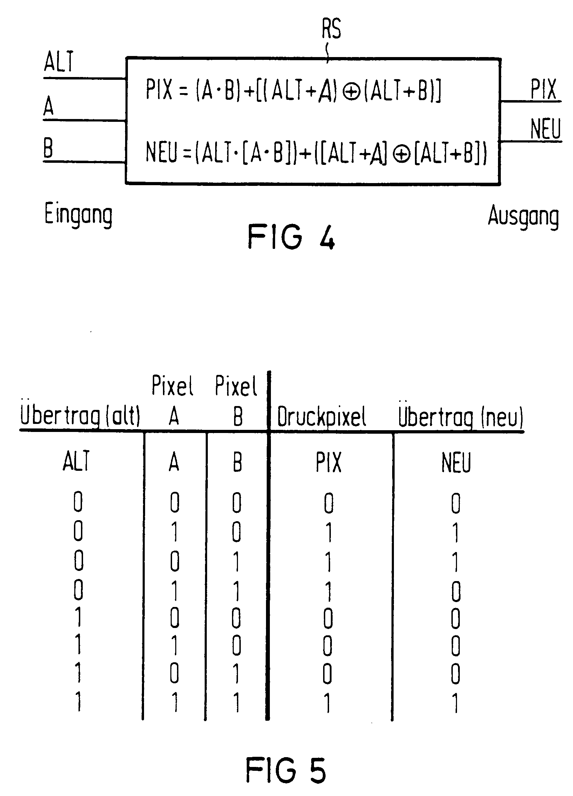

Im folgenden wird die zur Reduzierung der auf den Aufzeichnungsträger aufgebrachten Tintenmenge eingesetzte Reduzierungssteuerung RS anhand der Figur 4 näher beschrieben.

Die Reduzierungssteuerung RS ordnet jeder ursprünglichen abzudruckenden Druckzeile, die entsprechend der 50 Düsen des Druckkopfes aus 50 sogenannten Mikrozeilen bestehen, eine reudzierte Druckzeile zu, so daß die Anzahl der zu druckenden Pixel auf die Hälfte reduziert wird. Dabei werden jeweils zwei benachbarte Pixel der ursprünglichen Druckinformation zu einem Druckpixel und einem Weißpixel verrechnet. Die Anordnung von Druckpixel und weißen Pixeln erfolgt so, daß in einem schachbrettartigen Muster gedruckt wird. Die einzelnen Pixel, d. h. die einzelnen Tintentröpfchen haben dadurch eine möglichst kleine Berührungsfläche.

Die Verknüpfung der einzelnen Pixel geschieht auf folgende Weise:
Die zwei zu verrechnenden Pixel seien mit A und B bezeichnet. Ein zu druckendes Pixel wird der logische Zustand 1 (Intensität 1), ein Weißpixel der logische Zustand 0 (Intensität 0) zugeordnet. Die Intensitäten der beiden benachbarten Pixel werden nun addiert und die Summe anschließend halbiert.Dazu ist ein gegebenenfalls vorhandener Übertrag zu addieren. Ist das Ergebnis gleich 1, so wird ein Pixel gedruckt, beim Ergebnis 0 oder -0,5 wird keines gedruckt (Weißpixel). Bei einem Ergebnis von 0,5 wird ein Pixel gedruckt und ein Übertrag von - 0,5 zur Verrechnung mit dem nächsten Pixelpaar gespeichert.

Insgesamt ergibt sich eine Zuordnungsvorschrift mit drei Eingangsgrößen ALT, A und B sowie zwei Ausgangsgrößen PIX, NEU, wie sie in Figur 4 dargestellt ist. Mit ALT ist dabei der alte Übertrag, mit A, B die zu verrechnenden Pixel und mit PIX das zu druckende Pixel (bei PIX = 1) oder ein Weißpixel (bei PIX = 0) und mit NEU der neue Übertrag bezeichnet.

Aus der Darstellung gemäß Figur 5 ergibt sich folgende Beziehung:

$$PIX = (A . B) + ((ALT + A) \oplus (ALT + B))$$
$$NEU = (ALT . (A . B)) + ((ALT + A) \oplus (ALT + B))$$

wobei ein Multiplikationspunkt die algebraische Verknüpfung "UND", das + Zeichen die algebraische Verknüpfung "ODER" und das $\oplus$ Zeichen die algebraische Verknüpfung des "EXKLUSIV-ODER" bedeuten.

## Patentansprüche

1. Verfahren zum Reduzieren der mittels Tintenschreibeinrichtungen auf Aufzeichnungsträger aufgebrachten Tintenmenge

- mit einem Druckkopf zum Drucken von Zeichen in Form von einzelnen Pixeln und Verwendung von Tintenflüssigkeit mindestens einer Farbe, wobei
- ein Druckpixel durch Auftragen von Tintenflüssigkeit einer einzigen Farbe oder durch überlagertes Auftragen mehrerer farbiger Tinten,
- ein Weißpixel durch fehlenden Farbauftrag erzeugbar ist,
- jeweils zwei benachbarte Pixel der ursprünglichen Druckinformation zu einem Druckpixel und einem Weißpixel verrechnet werden und
- die berechneten Druckpixel und die weißen Pixel schachbrettartig auf dem Aufzeichnungsträger angeordnet werden,

**dadurch gekennzeichnet,** daß
- ein zu druckendes Pixel des zu verrechnenden Pixelpaares (Farbpixel oder Schwarzpixel) die Intensität 1, einem Weißpixel die Intensität 0 zugeordnet wird,
- die Intensitäten dieser beiden Pixel addiert und die Summe anschließend halbiert wird,
- zu diesem Zwischenergebnis ein Übertrag, der bei der Berechnung des Gesamtergebnisses für das vorhergehende Pixelpaar entstanden ist, addiert wird,
- in Abhängigkeit des Gesamtergebnisses
  - ein Pixel gedruckt wird und der Übertrag Null wird, wenn das Ergebnis = 1 ist,
  - ein Pixel gedruckt wird und der Übertrag -0,5 wird, wenn das Ergebnis 0,5 ist.

## Claims

1. Method of reducing the quantity of ink applied onto print media by means of ink writing devices, comprising
   - a print head for printing characters in the form of individual pixels and for using ink liquid of at least one color, with
   - a print pixel being formed by applying ink liquid of a single color or by applying a plurality of superposed color ink liquids,
   - a white pixel being formed due to the absence of ink color liquid,
   - two adjacent pixels of the original print information being processed so as to each define a print pixel and a white pixel, and
   - the calculated print pixels and white pixels being arranged on the print media so as to form a checkerboard pattern,

**characterized by**

- assigning an intensity value of 1.0 to a pixel to be printed of the two pixels to be processed (color pixel or black pixel) and an intensity value of 0 to a white pixel,
- adding the intensity values of the two pixels and dividing the sum by two,
- adding to said intermediate value a carry-over value defined when calculating the final value for the preceding pair of pixels, and
- in response to said final value
  - printing a pixel and the carry-over value equaling 0 when the final value equals 1.0, and
  - printing a pixel and the carry-over value equaling -0.5 when said final value equals 0.5.

**Revendications**

1.  Méthode destinée à réduire la quantité d'encre déposée au moyen d'un dispositif de projection d'encre sur des supports d'écriture
    - à l'aide d'une tête d'impression servant à l'impression de caractères sous forme de points individuels et faisant appel à une encre liquide d'au moins une couleur,
    - un point étant généré par l'apport d'une encre d'une seule et même couleur ou par la projection superposée de plusieurs encres de couleurs différentes,
    - et étant établi qu'un point blanc est généré par l'absence d'une projection d'encre,
    - deux points adjacents de l'information originale à imprimer étant respectivement traités comme un point d'impression et un point blanc conjugués et
    - que les points d'impression et les points blancs sont arranges sur le support d'écriture sous forme de damier,
    
    caractérisée par le fait
    - qu'un point à imprimer de la paire de points à conjuguer (point de couleur ou point noir) est affecté d'une intensité à la valeur 1 alors qu'un point blanc est affecté d'une intensité à la valeur 0,
    - que les intensités de ces deux points seront additionnées, le résultat étant ensuite divisé par deux pour établir une moyenne intermédiaire,
    - qu'il sera ensuite additionné à cette moyenne intermédiaire la retenue provenant du résultat total généré lors du calcul de la paire de points précédente,
    - et que, en fonction du résultat total,

- un point sera imprimé, la retenue étant nulle ( = 0) si le résultat est égal à 1 ou
- un point sera imprimé et la retenue égale à -0,5 si le résultat est égal à 0,5.

FIG 1

FIG 2

FIG 3

EP 0 548 097 B1

RS

ALT

$$PIX = (A \cdot B) + [(ALT + A) \oplus (ALT + B)]$$

$$NEU = (ALT \cdot [A \cdot B]) + ([ALT + A] \oplus [ALT + B])$$

A

B

PIX

NEU

Eingang

Ausgang

**FIG 4**

| Übertrag (alt) | Pixel A | Pixel B | Druckpixel | Übertrag (neu) |
|---|---|---|---|---|
| ALT | A | B | PIX | NEU |
| 0 | 0 | 0 | 0 | 0 |
| 0 | 1 | 0 | 1 | 1 |
| 0 | 0 | 1 | 1 | 1 |
| 0 | 1 | 1 | 1 | 0 |
| 1 | 0 | 0 | 0 | 0 |
| 1 | 1 | 0 | 0 | 0 |
| 1 | 0 | 1 | 0 | 0 |
| 1 | 1 | 1 | 1 | 1 |

**FIG 5**

8